# EUROPEAN PATENT APPLICATION

(11) **EP 2 380 525 A1**
(43) Date of publication of application: **26.10.2011**
(21) Application number: 10161007.9
(22) Date of filing: 26.04.2010
(51) Int. Cl.: A61C 13/273, A61C 8/00

(54) **Dental prosthesis and fixing method of the same to an implant prearranged in the bone**

(71) Applicant: BIO Medi Face S.A., 6855 Stabio (CH)
(72) Inventor: Spiga, Marco, 20057, Vedano al Lambro (IT); Pedretti, Giorgio, 23020, Gordona (IT)
(74) Representative: Martegani, Franco

(57) **Abstract**

A dental plate includes a dental structure (23) with at least two tooth-shaped elements (24), each of which is suitable for being fixed to a relative implant (14) englobed in a bone (13) by means of a screw (25) passing through a hole (26) produced through said tooth-shaped element (24). Said dental plate is characterized in that said hole (26) is completely positioned and obtained in the rear part of said tooth element (14).

## Description

The present invention relates to a dental plate having a configuration which is such as to be particularly suitable for being fixed to an implant prearranged in the bone (mandibular or maxillary) essentially with an angulation particularly exposed towards the outside of the mouth, in a so-called vestibular manner.

The direct application of the dental plate with no correction of the above angulation would lead to an unsatisfactory final result from a functional and aesthetic point of view (teeth protruding outwards).

The invention also relates to a fixing method of the dental plate to the implant.

The term dental plate, in this context, refers to a dental structure consisting of a plurality of adjacent shaped elements, each having the form of a tooth with an aesthetic front coating, for example made of resin or porcelain.

Each element of the structure is fixed by means of a screw to the plant previously englobed in the bone, for example mandibular.

As is well known to experts in the field, there are generally two known methods for fixing a dental plate to the implant, with correction of the insertion angle of the dental structure in the implant itsef.

A first method consists in suitably shaping each tooth element of the structure at an angle, which is fixed to the implant by means of a screw introduced through a pass-through hole of the same element, said hole being coaxial with the axis of the implant.

Said pass-through hole is consequently situated on the front part of the tooth element destined for receiving the above aesthetic coating.

Once the screw has been introduced, the hole, although closed and filled with suitable resins, defines a surface area of a different nature with respect to that of the surrounding area of the tooth element; this causes, especially with time, a non-uniform anti-aesthetic colouring of the coating, above all if the latter is made of porcelain.

In order to overcome the above drawback, it is customary to assemble an angular adaptor or corrector between the implant and tooth element.

The corrector is fixed to the plant, on one side, by means of a first screw, and the tooth element is fixed on the opposite side of the same corrector, by means of a second screw.

Said second screw is introduced through a hole, which is not frontal but positioned above through the tooth element.

This avoids the formation in the front part of the tooth element of a surface area of a different nature which, as mentioned above, negatively influences the appearance of the coating.

This method however is costly due to the presence of two additional components, the angular corrector and the second screw, and is not completely satisfactory from an aesthetic point of view, as said corrector is outside the gum and is visible when the patient opens his mouth, above all extensively, for example when he laughs.

Furthermore, the presence of two screws and corrector increases the risk of breakage and undesired unscrewing.

The general objective of the invention is to overcome the drawbacks of the known art briefly described above, by providing a dental plate which is economical, which produces appreciable aesthetic results and which is reliable with time.

This objective is achieved by a denture having the characteristics specified in the enclosed main claim and subclaims.

The structural and functional characteristics of the invention, and its advantages with respect to the known art, will appear clearly understandable to an expert in the field from the following description referring to the enclosed claims which describe an example of a dental plate produced according to the same invention.

In the drawings:
- figure 1 is a schematic sectional view illustrating an implant englobed in a mandibular bone with an insertion angulation of the dental crown extremely exposed towards the outside of the mouth;
- figures 2 and 3 are schematic sectional views respectively illustrating two known methods for correcting the insertion angle of the dental structure;
- figure 4 is a section as per figures 2, 3 illustrating a denture according to the invention;
- figure 5 is a detail illustrating an example of a fixing screw used in the denture according to the invention;
- figures 6-9 are schematic sectional details illustrating the sequence of the insertion phases of the screw in the implant; and
- figure 10 is a perspective view illustrating an example of a dental structure produced according to the invention.

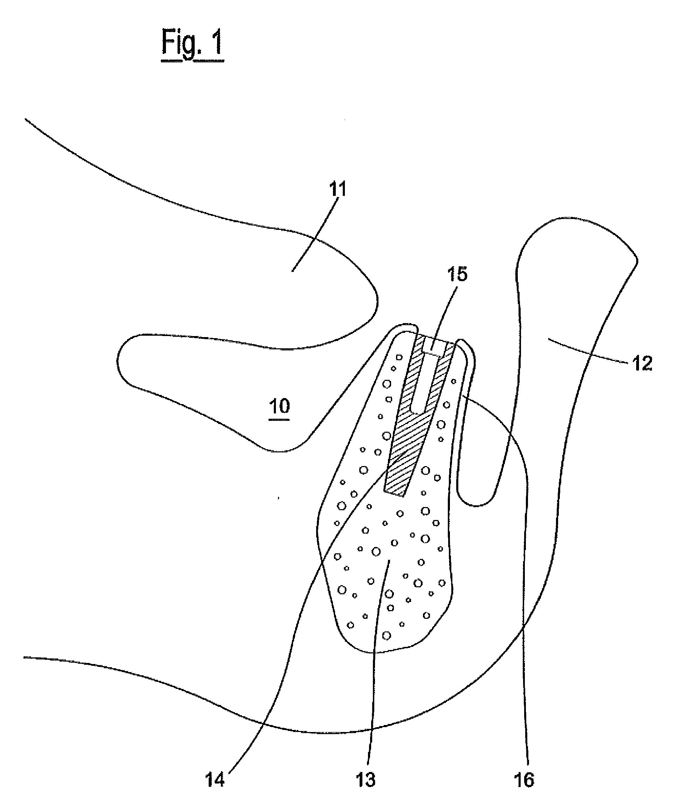

In figure 1 of the drawings, 10 indicates the oral cavity of a patient comprising the tongue 11, the lower lip 12, a mandibular bone 13 englobing a plurality of implants 14; in each of said implants 14 there is a threaded seat 15 for a fixing screw of a tooth-shaped element, forming part of a dental structure (in this figure not shown). 16 indicates the gum covering the bone 13.

As can be clearly seen from the drawing - for clinically obligatory reasons - the implant 14 has been inserted in the bone 13 with an angulation which is extremely exposed towards the outside of the mouth.

As already mentioned, for both aesthetic and functional reasons, this angulation must be recovered (reduced).

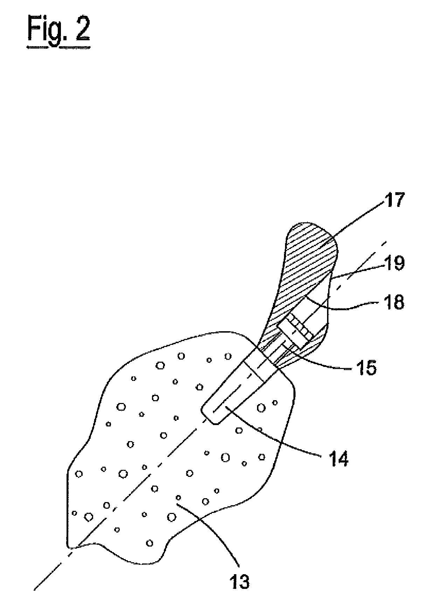

According to the known method indicated in figure 2, a tooth element 17 is envisaged, which is suitably shaped for the purpose with an angulation which is such as to reduce the above excessively exposed angulation, and which is fixed to the implant 14 by means of a screw 15 passing through a hole 18 situated in the element 17.

From the drawing of figure 2, it can be clearly seen how said hole 18 defines a front mouth which forms an area 19 in the tooth element 17 of a non-uniform nature with respect to the surrounding area.

The presence of this non-uniform area with respect to that surrounding it negatively influences the aesthetic appearance of the coating, made of resin or porcelain, subsequently applied in the front of the tooth element 17.

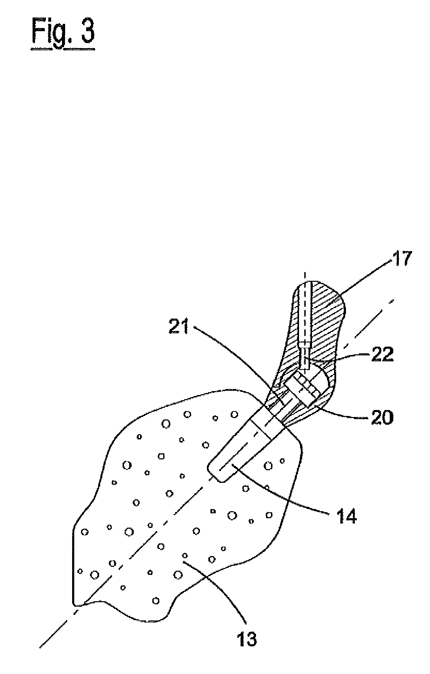

In order to overcome the drawback according to figure 2, the fixing method schematized in figure 3 has been proposed.

Said method of figure 3 envisages the use of an angular corrector 20 which, on one side, is fixed to the implant 14 by means of a first screw 21: on the opposite side of the corrector 20, the tooth element 17 is fixed by means of a second screw 22. As already mentioned in the preamble of this description, the use of the corrector 20 however is costly, anti-aesthetic, and with time increases the risk of unscrewing, requiring the use of two fixing screws.

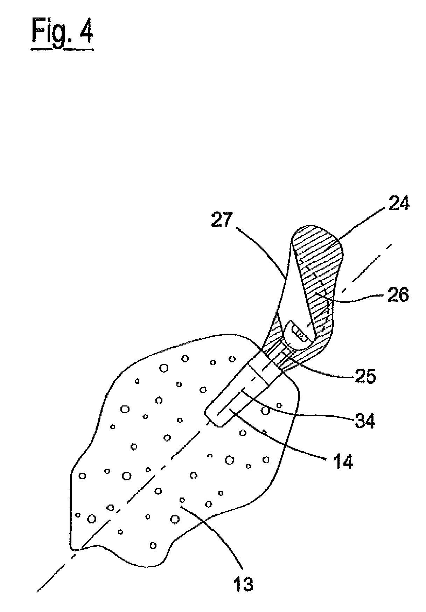

The drawbacks of the known art briefly mentioned above and illustrated in figures 2, 3 are overcome by the dental plate and method according to the invention, hereafter described with reference to figures 4-10.

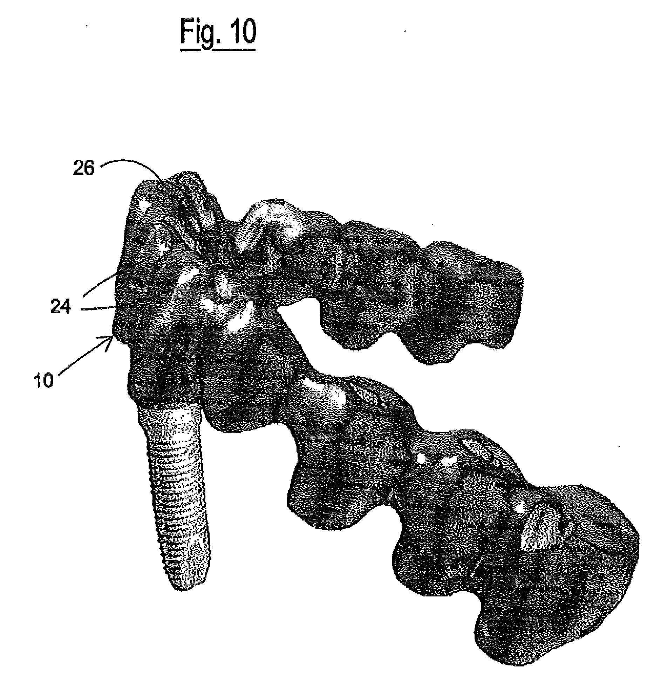

The dental plate according to the invention is structurally composed of a dental structure 23 (figure 10) comprising a plurality of tooth-shaped elements 24 which, externally, are destined for being coated - with a known method - by means of a coating (not shown) made of resin or porcelain.

Each tooth element 24, suitably shaped and angled, so as to correct the insertion angle of the implant 14, is fixed to the implant 14 itself by means of a single screw 25.

According to the invention, said screw 25 is characteristically housed in and passes through a hole, space or opening 26, situated entirely in the rear part of the tooth element 24, i.e. without involving the front part destined for receiving the aesthetic coating (not shown).

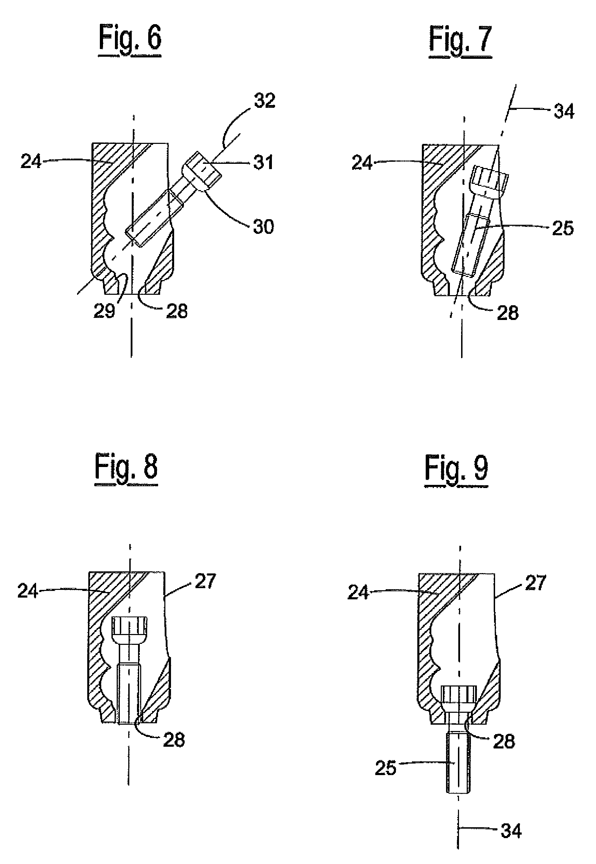

As can be clearly seen from the drawings, with particular reference to the operative sequence of figures 6-9, said hole or space 26 is shaped with walls having a generally tapered or funnelled configuration, forming an inlet mouth 27 with walls which taper towards an opposite outlet hole 28; said hole 28 has a diameter substantially equal to that of the stem of the screw 25 that must pass through it.

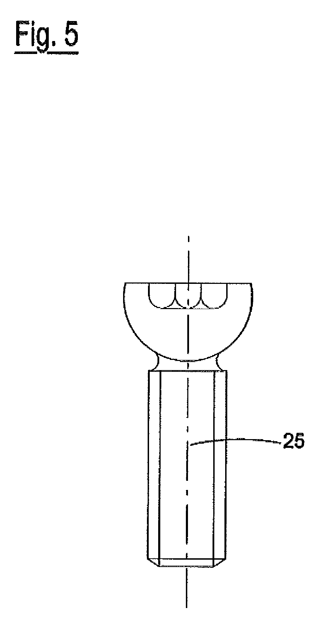

In addition, the hole 28 has a partially spherical mouth 29 against which a corresponding portion 30 of the head 31 of the screw 25 (figures 5, 9) is abutted.

The funnel conformation of the opening, space or hole 26 and its dimensions are such as to allow the insertion of the fixing screw 25 with a roto-translation movement. Said movement comprises a plurality of different axes 32, 33, which are oblique with respect to the axis 34 of the implant 14.

In this way, the tooth elements 24 of the dental structure 23 (suitably shaped so as to correct the excessively exposed insertion angle of the implant 14) can be fixed to the relative implants 14 englobed in the bone 13, without the use of angular correctors, as is necessary on the other hand in one case of the known art, and without the presence of pass-through holes through the front part of the tooth element 17, as is necessary in the other case.

All the drawbacks of a functional, aesthetic nature and with respect to the higher cost of the dental plates produced according to the known art mentioned in the preamble of this description, are thus avoided.

The scope of the invention is defined by the enclosed claims.

## Claims

1. A dental plate of the type comprising a dental structure (23) with at least two tooth-shaped elements (24), each of which is suitable for being fixed to a relative implant (14) englobed in a bone (13) by means of a screw (25) passing through a hole (26) produced through said tooth-shaped element (24), **characterized in that** said hole (26) is completely positioned and created in the rear part of said tooth element (14).

2. The dental plate according to claim 1, **characterized in that** said hole (26) comprises an insertion route of the screw (25) with a roto-translation movement according to a plurality of axes which are oblique with respect to the axis (34) of the implant (14) on which said screw (25) must be screwed.

3. The dental plate according to claim 1, **characterized in that** said hole (26) comprises a shaped space or opening with walls having a generally tapered or funnelled configuration, forming an inlet mouth (27) with walls which are tapered towards an opposite outlet hole (28) having a diameter substantially equal to that of the stem of said screw (25) which must pass through it.

4. The dental plate according to claim 3, **characterized in that** said hole (28) has a partially spherical mouth (29) against which a corresponding portion (30) of a head (31) of said screw (25) is abutted.

5. A method for fixing a dental plate according to any of the previous claims, **characterized in that** it comprises the following phases: creating a hole (26) entirely in the rear part of said tooth element (24), and passing said fixing screw (25) of the tooth element (24) in said implant (14) through said hole (26).

6. The fixing method according to claim 5, **characterized in that** said fixing screw (25) passes through said hole (26) with a roto-translation movement according to a plurality of axes which are oblique with respect to the axis (34) of the plant (14) on which said screw (25) must be screwed.
